# EUROPÄISCHE PATENTSCHRIFT

(11) **EP 3 500 747 B1**
(45) Veröffentlichungstag und Bekanntmachung des Hinweises auf die Patenterteilung: **22.07.2020**
(21) Anmeldenummer: 16781685.9
(22) Anmeldetag: 23.09.2016
(51) Int. Cl.: F02K 5/00, B64D 27/24, H02K 21/24, H02K 7/14, H02K 16/02

(54) **FLUGZEUGTURBINE MIT GEGENLÄUFIGEN PROPELLERN**
AIRCRAFT TURBINE HAVING COUNTER-ROTATING PROPELLERS
TURBINE D'AÉRONEF À HÉLICES CONTRAROTATIVES

(43) Veröffentlichungstag der Anmeldung: 26.06.2019
(73) Patentinhaber: Rolls-Royce Deutschland Ltd & Co KG, 15827 Blankenfelde-Mahlow (DE)
(72) Erfinder: DORFNER, Matthias, 15827 Blankenfelde-Mahlow (DE); PETERMAIER, Korbinian, 15827 Blankenfelde-Mahlow (DE)
(86) Internationale Anmeldenummer: PCT/EP2016/072683
(87) Internationale Veröffentlichungsnummer: WO 2018/054483

(56) Entgegenhaltungen:
- CA-A1- 2 847 352
- CN-B- 101 359 862
- DE-T2- 60 320 056
- DE-U1-202008 015 201

## Beschreibung

Die Erfindung betrifft Flugzeugturbinen mit gegenläufigen Propellern nach dem Oberbegriff des Anspruchs 1.

Es sind Flugzeugturbinen mit gegenläufigen Propellern bekannt, deren Primärantrieb auf dem Verbrennungsprinzip basiert.

Bei einer einfachen Propelleranordnung wird der durch den Propeller strömenden Luft ein Drall beigebracht, der den Propellerwirkungsgrad reduziert. Ein zweiter, hinter dem ersten Propeller angebrachter, gegenläufig rotierender Propeller reduziert diesen Drall und erhöht dadurch den Propellerwirkungsgrad. Allerdings geht das Prinzip gegenläufiger Propeller mit einer signifikanten Geräuschentwicklung einher.

Hierzu beschreibt die CN 101 359 862 B einen Antrieb, der eine permanenterregte Synchronmaschine umfasst. Mit den Antrieb können gegenläufige Propeller angetrieben werden. Die Synchronmaschine umfasst einen Stator, einen innenliegenden Rotor und einen außenliegenden Rotor. Dabei weisen der innenliegende Rotor und der außenliegende Rotor die gleiche Polzahl auf.

Ferner offenbart die CA 2 847 352 A1 eine Antriebseinrichtung für ein Drehflügel- oder Starrflügelflugzeug. Die Antriebseinrichtung umfasst eine Mehrzahl von gestapelten Elektromotorelementen, wobei jedes Elektromotorelement direkt mit einer rotierenden Welle verbunden ist und aus mindestens einem festen Stator und mindestens einem sich bewegenden Rotor besteht.

Aufgabe der vorliegenden Erfindung ist, eine Flugzeugturbine mit gegenläufigen Propellern anzugeben, deren Geräuschentwicklung signifikant reduziert ist.

Diese Aufgabe wird ausgehend von einer Flugzeugturbine der eingangs genannten Art erfindungsgemäß durch eine Flugzeugturbine gelöst, die das im kennzeichnenden Teil des Anspruchs 1 angegebene Merkmal aufweist.

Danach weist die Flugzeugturbine mit gegenläufigen Propellern einen Primärantrieb auf, der anstelle auf dem Verbrennungsprinzip auf dem Elektroantriebsprinzip basiert.

Elektroantriebe sind wesentlich leiser als Verbrennungsantriebe, so dass die Flugzeugturbine insgesamt in der Geräuschentwicklung signifikant reduziert ist.

Ferner ist der Primärantrieb als ein rotationssymmetrischer Synchronmotor mit Zahnspulenwicklung ausgebildet mit für den ersten Propeller einem ersten Rotor mit einer ersten Polzahl und für den zweiten Propeller einem zweiten Rotor mit einer zweiten Polzahl. Der erste Rotor ist ein Innenläufer und der zweite Rotor ein Außenläufer. Die erste Polzahl und die zweite Polzahl sind voneinander verschieden. Der erste und der zweite Rotor sind jeweils unabhängig zueinander drehbar gelagert. Der erste und der zweite Rotor weisen jeweils eine Wellen- und Flanschanordnung zur Anbringung je einen der beiden Propeller auf.

Ein derartiger Primärantrieb hat eine besonders ruhige und damit leise Geräuschentwicklung und ist daher in besonderer Weise für den Antrieb geeignet.

Bisher wurde bei einem Zahnspulenmotor nur eine dominante Oberwelle des Strombelags genutzt. Zweischichtige Zahnspulenwicklungen, wie sie beim beanspruchten Gegenstand vorliegen, bilden dagegen einen Strombelag mit mehreren dominanten Oberwellen aus. Durch die Wahl unterschiedlicher, geeignet gewählter Polzahlen für jeden der unabhängig zueinander drehbar gelagerten Rotoren werden zwei dominante Oberwellen genutzt.

Vorteilhafte Ausgestaltungen der Erfindung sind Gegenstand von Unteransprüchen.

Bei einer vorteilhaften Ausgestaltung der Erfindung ist der Synchronmotor permanenterregt ausgebildet.

Bei einer weiteren vorteilhaften Ausgestaltung der Erfindung ist die Flugzeugturbine derart ausgelegt realisiert, dass sich die gegenläufigen Propeller abhängig von deren Antriebsfrequenz mit unterschiedlichen Geschwindigkeiten drehen.

Nachfolgend wird ein Ausführungsbeispiel der Erfindung anhand einer Zeichnung näher erläutert. Darin zeigen:
- Figur 1: ein Motormodul in einer abgewickelten Darstellung, und
- Figur 2: ein Diagramm mit Wicklungsfaktoren einer zweischichtigen Zahnspulenwicklung.

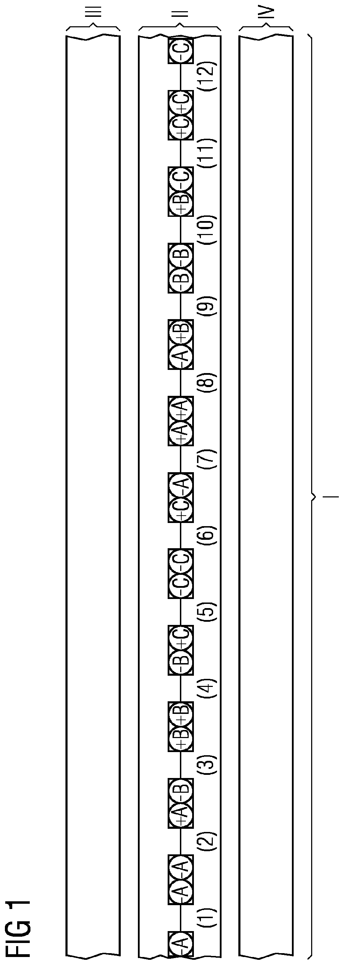

Figur 1 zeigt ein Motormodul I, bestehend aus einer Urwicklung im Stator II und 10 beziehungsweise 14 Polen (Zahnspulen) in je einer Rotorkomponente III beziehungsweise IV. Der gezeigte Ausschnitt des Stators II weist hier 12 Zahnspulen auf, die auf einem magnetisch und elektrisch nicht leitfähigen Träger angeordnet sind. Die Rotorkomponente III ist hier als ein Außenrotor mit beispielsweise 2P = 10 Polen (Zahnspulen) und die Rotorkomponente IV ist hier als ein Innenrotor mit beispielsweise 2P = 14 Polen (Zahnspulen) ausgebildet.

Unter Motormodul I wird die magnetisch kleinste Einheit eines Elektromotors verstanden. Sie besteht aus einer Urwicklung und aus Rotoranordnungen, die zu der Urwicklung korrespondierende Polzahlen aufweisen. Ein Elektromotor besteht aus wenigstens einem Motormodul I. Er kann aber auch beliebig viele Motormodule I aufweisen, die zueinander elektromagnetisch symmetrisch sind.

Der vorgeschlagene permanent erregte Synchronmotor ist rotationssymmetrisch aufgebaut, insbesondere ist der permanent erregte Synchronmotor in einer Radialfeld- oder in einer Axialfeldtopologie ausgeführt. Der einfacheren Darstellung wegen ist jedoch repräsentativ für jegliche Motortopologie eine Abwicklung abgebildet.

Das Motormodul I in der Figur 1 umfasst, wie schon erwähnt, 12 Zahnspulen, die auf einer elektrisch und magnetisch nicht leitfähigen Trägerstruktur angeordnet sind. Die Trägerstruktur weist Zähne und Nuten auf. Auf jedem der Zähne ist eine Zahnspule angeordnet. In jeder Nut liegen zwei Spulenseiten. Insofern handelt es sich um eine zweischichtige Zahnspulenwicklung.

Weiter sind in der Figur 1 schematisch zwei Rotoren III und IV dargestellt. Ein Rotor, zum Beispiel III, ist dabei, wie ebenfalls schon erwähnt, ein Außenläufer. Der zweite Rotor, zum Beispiel IV, ist ein Innenläufer. Die Polzahlen beider Rotoren unterscheiden sich.

In der in der Figur 1 gezeigten beispielhaften Ausführung weist der Innenläufer IV in einem Motormodul 14 Pole und der Außenläufer III 10 Pole auf.

Besteht der gesamte Motor aus einem Motormodul I, weist demnach der Außenläufer III 10 Pole und der Innenläufer IV 14 Pole auf.

Besteht der Motor aus N Motormodulen I, weist der Außenläufer Nx10 Pole und der Innenläufer Nx14 Pole auf.

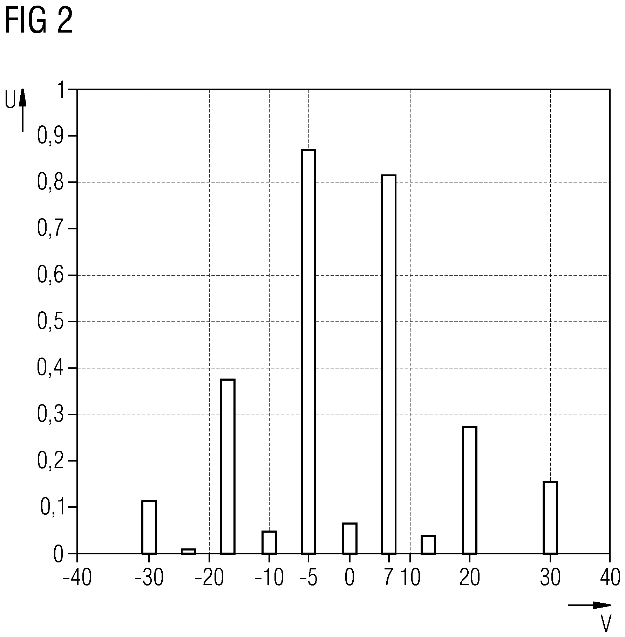

Für derartige Wicklungssysteme sind in der Figur 2 die Wicklungsfaktoren u dargestellt. Aus den Wicklungsfaktoren u können die dominanten Oberwellen der Strombelage abgeleitet werden. Die Wicklungsfaktoren können als Maß für den drehmomentbildenden Strombelag angesehen werden. Bei der Auslegung einer derartigen Maschine liegt stets das Ziel zugrunde, eine der dominanten Strombelagsoberwellen v zu wählen. Vorliegend wäre das v = -5, das heißt, die minus fünfte oder v = sieben, das heißt, die siebte Strombelagsoberwelle. Das Vorzeichen bezeichnet die Drehrichtung der Oberwelle. Es sei darüber hinaus darauf hingewiesen, dass sich auch die Frequenz beider Oberwellen unterscheidet.

Der Außenläufer mit Nx10 beziehungsweise 10 Polen wird synchron mit der fünften Oberwelle laufen.

Der Innenläufer mit Nx14 beziehungsweise 14 Polen wird synchron, und damit entgegen des Außenläufers, mit der siebten Oberwelle laufen.

Werden nun Innen- und Außenläufer III und IV unabhängig zueinander drehbar gelagert und mit geeigneten Wellen- und Flanschanordnungen versehen, können zwei Propeller montiert werden, die aufgrund der genutzten Oberwellen gegenläufig und abhängig von deren Frequenz mit unterschiedlichen Geschwindigkeiten drehen.

Die Propeller können sich im Übrigen in Durchmesser, Blattform und Blattzahl unterscheiden.

## Patentansprüche

1. Flugzeugturbine mit gegenläufigen Propellern und einem Primärantrieb, wobei
- der Primärantrieb auf dem Elektroantriebsprinzip basiert.
- der Primärantrieb als ein rotationssymmetrischer Synchronmotor mit Zahnspulenwicklung ausgebildet ist mit für den ersten Propeller einem ersten Rotor (IV) mit einer ersten Polzahl und für den zweiten Propeller einem zweiten Rotor (III) mit einer zweiten Polzahl,
- der erste Rotor (IV) ein Innenläufer und der zweite Rotor (III) ein Außenläufer ist,
- der erste und der zweite Rotor (IV, III) jeweils unabhängig zueinander drehbar gelagert sind und
- der erste und der zweite Rotor (IV, III) jeweils eine Wellen- und Flanschanordnung zur Anbringung je einen der beiden Propeller aufweisen,
**dadurch gekennzeichnet, dass**
- die Zahnspulenwicklung eine zweischichtige Zahnspulenwicklung ist und
- die erste Polzahl und die zweite Polzahl verschieden sind.

2. Flugzeugturbine nach Anspruch 1, **dadurch gekennzeichnet, dass** der Synchronmotor permanenterregt ausgebildet ist.

3. Flugzeugturbine nach einem der Ansprüche 1 oder 2, **dadurch gekennzeichnet, dass** eine Auslegung realisiert ist, durch die sich die gegenläufigen Propeller abhängig von deren Antriebsfrequenz mit unterschiedlichen Geschwindigkeiten drehen.

## Claims

1. Aircraft turbine with counter-rotating propellers and a primary drive, wherein
- the primary drive is based on the electric drive principle,
- the primary drive is designed as a rotationally symmetrical synchronous motor with a tooth coil winding, with a first rotor (IV) with a first number of poles for the first propeller, and a second rotor (III) with a second number of poles for the second propeller,
- the first rotor (IV) is an internal rotor and the second rotor (III) is an external rotor,
- the first and the second rotor (IV, III) are each mounted so that they can rotate independently with respect to each other, and
- the first and the second rotor (IV, III) each have a shaft-and-flange arrangement for attachment of each of the two propellers,
**characterized in that**
- the tooth coil winding is a double-layer tooth coil winding, and
- the first number of poles and the second number of poles differ from each other.

2. Aircraft turbine according to Claim 1, **characterized in that** the synchronous motor is designed so that it is permanently excited.

3. Aircraft turbine according to either of Claims 1 and 2, **characterized in that** a design is produced by means of which the counter-rotating propellers rotate at different speeds as a function of the drive frequency.

## Revendications

1. Turbine d'aéronef comprenant des hélices tournant en sens inverse et un entraînement primaire, dans laquelle
- l'entraînement primaire est basé sur le principe d'un entraînement électrique,
- l'entraînement primaire est réalisé sous forme de moteur synchrone à symétrie de révolution avec un enroulement de bobine denté avec, pour la première hélice, un premier rotor (IV) avec un premier nombre de pôles et pour la deuxième hélice, un deuxième rotor (III) avec un deuxième nombre de pôles,
- le premier rotor (IV) est un rotor intérieur et le deuxième rotor (III) est un rotor extérieur,
- le premier et le deuxième rotor (IV, III) sont supportés de manière rotative à chaque fois indépendamment l'un de l'autre et
- le premier et le deuxième rotor (IV, III) présentent chacun un agencement d'arbre et de bride pour le montage de l'une des deux hélices,
**caractérisée en ce que**
- l'enroulement de bobine denté est un enroulement de bobine denté à deux couches et
- le premier nombre de pôles et le deuxième nombre de pôles sont différents.

2. Turbine d'aéronef selon la revendication 1, **caractérisée en ce que** le moteur synchrone est réalisé avec une excitation permanente.

3. Turbine d'aéronef selon l'une quelconque des revendications 1 et 2, **caractérisée en ce que** dans une conception, les hélices tournant en sens inverse tournent à des vitesses différentes en fonction de leur fréquence d'entraînement.
